Europäisches Patentamt

European Patent Office

Office européen des brevets

(11) Numéro de publication : **0 077 256 B1**

# (12) FASCICULE DE BREVET EUROPÉEN

(45) Date de publication du fascicule du brevet :
**20.08.86**

(21) Numéro de dépôt : **82401814.7**

(22) Date de dépôt : **05.10.82**

(51) Int. Cl.⁴ : **H 01 R 13/66, F 16 L 25/00,
F 16 L 33/20, B 23 K 9/32**

(54) **Dispositif de raccordement étanche pour câble composite.**

(30) Priorité : **09.10.81 FR 8119039**

(43) Date de publication de la demande :
**20.04.83 Bulletin 83/16**

(45) Mention de la délivrance du brevet :
**20.08.86 Bulletin 86/34**

(84) Etats contractants désignés :
**AT BE CH DE FR GB IT LI LU NL SE**

(56) Documents cités :
**DE-A- 2 430 665
DE-B- 1 247 774
GB-A- 824 833
MACHINE DESIGN, vol. 51, no. 22, Septembre 1979,
pages 121-128, Penton (USA); "Pipe and tubing"**

(73) Titulaire : **LA SOUDURE AUTOGENE FRANCAISE
75, Quai d'Orsay
F-75007 Paris (FR)**

(72) Inventeur : **Bras, Christian
19, bd Anatole France
F-79200 Parthenay (FR)**
Inventeur : **Sabiron, Claude
14, rue des Arbres
F-79200 Pompaire (FR)**

(74) Mandataire : **Bouton Neuvy, Liliane et al
L'Air liquide, Société Anonyme pour L'Etude et
L'Exploitation des Procédés Georges Claude 75, Quai
d'Orsay
F-75321 Paris Cedex 07 (FR)**

Jouve, 18, rue St-Denis, 75001 Paris, France

## Description

La présente invention est relative à un dispositif de raccordement étanche pour câble composite comprenant un conduit entouré d'une nappe, du type comportant un raccord muni d'un prolongement qui présente un épaulement, un joint d'étanchéité, et une bague de sertissage disposée autour dudit prolongement. L'invention est destinée notamment à être utilisée sur les câbles composites pour dispositifs de soudage, qui sont des câbles co-axiaux destinés à amener à une torche de soudage l'énergie nécessaire au soudage proprement dit mais également un gaz de protection, un liquide, une poudre, etc.

Un tel câble doit être souple et pouvoir subir différentes contraintes mécaniques sans dommage. Ce câble est généralement constitué tout d'abord d'un conduit souple central de passage du gaz (ou de la poudre) entouré d'une nappe de fils tressés pour l'amenée du courant électrique de soudage comportant des passages dans lesquels sont disposés les fils d'arrivée du courant électrique de commande, le tout étant entouré d'une gaine extérieure souple isolante.

Le document DE-B-1 247 774 montre un dispositif de raccordement du type précité dans lequel le prolongement du raccord est constitué par un mandrin rigide enfilé dans le conduit du câble composite et servant de support intérieur lors du sertissage de la bague extérieure. Cet agencement présente un inconvénient sérieux résidant dans la diminution de la section de passage du conduit provoquée par ledit prolongement.

L'invention a pour but de fournir un dispositif de raccordement permettant d'obtenir, de façon économique, une retenue axiale de la nappe et une étanchéité sûre sans diminuer le diamètre utile du conduit.

A cet effet, l'invention a pour objet un dispositif de raccordement du type précipité, caractérisé en ce que ledit épaulement est un épaulement intérieur dudit prolongement, en ce que le joint d'étanchéité est enfilé sur le conduit, en ce que ledit prolongement est inséré entre le conduit et la nappe et forme une douille de sertissage déformable, et en ce que le joint d'étanchéité est pressé vers l'épaulement par une partie déformée de la douille.

Lorsque le conduit est souple, de préférence, le joint d'étanchéité est interposé entre l'épaulement et un tube de renfort disposé autour du conduit. De préférence, pour fixer la position de ce tube de renfort, son extrémité présente une partie d'ancrage.

Si, dans le dispositif de raccordement suivant l'invention, un bourrelet prévu à l'extrémité du conduit est interposé entre l'épaulement de la douille et le joint d'étanchéité, on obtient également une retenue axiale positive du conduit.

Dans le cas d'un câble composite comprenant, outre le conduit et la nappe, une gaine extérieure, de façon avantageuse, la gaine se termine à une certaine distance de la douille et l'extrémité de cette gaine est entourée d'une deuxième bague de sertissage.

Un exemple de réalisation de l'invention va maintenant être décrit en regard du dessin annexé, sur lequel :

la figure 1 est une coupe longitudinale d'un dispositif de raccordement selon l'invention monté sur un câble composite ;

la figure 2 est une coupe prise selon la ligne II-II de la figure 1.

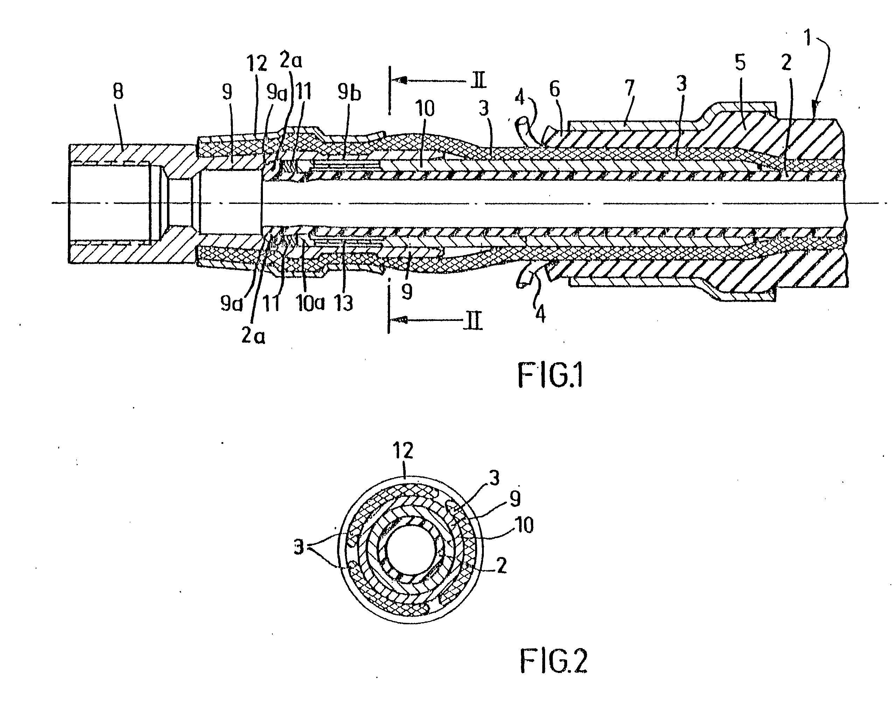

En se reportant aux figures 1 et 2, on voit un câble composite 1, constitué d'un conduit central souple 2 de passage de gaz (ou de poudre ou de liquide) entouré d'une nappe de fils de cuivre tressés 3, nappe dans laquelle sont disposés des fils 4 d'arrivée d'énergie électrique, ces divers éléments étant entourés par une gaine isolante également souple 5. L'ensemble conduit 2 - nappe 3 est dénudé sur une certaine longueur, et l'extrémité 6 de la gaine 5 est sertie sur l'ensemble au moyen d'une bague de sertissage 7. A l'extrémité de ce câble composite 1 est monté un dispositif de raccordement qui comprend les éléments suivants : un raccord proprement dit 8, muni d'une douille de sertissage 9, un tube de renfort 10, un joint d'étanchéité 11, l'ensemble étant maintenu par une bague de sertissage 12. Le tube de renfort 10 entoure le conduit central 2 sur une certaine longueur, jusque dans la bague 7, entre ce conduit et la nappe 3. L'extrémité libre du conduit 2 comporte un bourrelet 2a destiné à prendre appui sur un épaulement intérieur 9a de la douille 9 du raccord 8 et à être écrasé par le joint d'étanchéité 11 disposé devant l'extrémité avant 10a du tube de renfort. Bien que le tube de renfort 10 ait pour objet d'éviter l'écrasement du conduit central 2, il doit cependant permettre son sertissage à l'intérieur de la douille 9 du raccord 8. Pour ce faire, son extrémité 10a qui vient se loger à l'intérieur de cette douille 9 comporte une partie d'ancrage annulaire amincie 13 offrant une moindre résistance. L'ensemble formé par l'extrémité 2a du conduit central 2 entourée du tube de renfort 10 est introduit, après interposition du joint d'étanchéité 11, à l'intérieur de la douille 9 du raccord 8, jusqu'à l'épaulement 9a destiné à coopérer avec le bourrelet 2a. L'extrémité de la nappe de fils tressés 3 est disposée à l'extérieur et autour de la douille 9, qui comporte également une partie amincie ou gorge 9b, destinée à faciliter l'opération de sertissage et située au droit de la partie amincie 13 du tube 10. L'ensemble est alors serti au moyen de la bague 12. Il faut noter que le sertissage du tube de renfort 10 sur le conduit 2 immédiatement derrière le joint 11 a pour effet que le bourrelet est écrasé et maintenu entre l'épaulement 9a de la douille du raccord et le joint d'étanchéité, écrasé lui-même par l'extrémité du tube de renfort. Ainsi, le dispositif de raccordement suivant l'invention empêche toute fuite de gaz de protection et même toute possibilité d'entrée d'air dans le circuit de gaz, grâce à la compression du joint 11, même lorsque le câble subit des contraintes. En outre, il empêche tout glissement des couches individuelles du câble lorsqu'on effectue une traction sur le câble ou sur le raccord. En effet, le conduit 2 est bloqué axialement par le coincement de son bourrelet 2a, la nappe 3 par son sertissage sur la douille 9, et la gaine 5 par son sertissage par la bague 7.

Le dispositif de raccordement selon l'invention peut s'appliquer notamment à tout câble coaxial de torche de soudage ou autre comportant une nappe de fils sertis ou maintenus sur un raccord creux relié à un conduit de transport de gaz, de liquide, de poudre ou de tout autre matériau transportable par pression ou gravité.

En variante, le sertissage peut s'effectuer sur un mandrin introduit dans le conduit 2, ce qui permet de ne pas réduire le diamètre utile de celui-ci sans faire appel au tube 10 de renfort.

En variante également, l'extrémité du tube 10 peut être moletée pour assurer un ancrage positif en rotation lors du sertissage de la bague 12.

## Revendications

1. Dispositif de raccordement étanche pour câble composite comprenant un conduit (2) entouré d'une nappe (3), du type comportant un raccord (8) muni d'un prolongement (9) qui présente un épaulement (9a), un joint d'étanchéité (11), et une bague de sertissage (12) disposée autour dudit prolongement, ce dispositif étant caractérisé en ce que ledit épaulement (9a) est un épaulement intérieur dudit prolongement, en ce que le joint d'étanchéité (11) est enfilé sur le conduit (2), en ce que ledit prolongement (9) est inséré entre le conduit et la nappe (3) et forme une douille de sertissage déformable, et en ce que le joint d'étanchéité est pressé vers l'épaulement par une partie déformée (9b) de la douille.

2. Dispositif de raccordement suivant la revendication 1, caractérisé en ce que la partie (9b) de la douille (9) déformée par la bague de sertissage (12) est amincie pour faciliter le sertissage.

3. Dispositif de raccordement suivant l'une des revendications 1 et 2, caractérisé en ce que le joint d'étanchéité (11) est interposé entre l'épaulement (9a) et un tube de renfort (10) disposé autour du conduit (2).

4. Dispositif de raccordement suivant la revendication 3, caractérisé en ce que l'extrémité du tube de renfort (10) présente une partie d'ancrage (13).

5. Dispositif de raccordement suivant l'une quelconque des revendications 1 à 4, caractérisé en ce qu'un bourrelet (2a) prévu à l'extrémité du conduit (2) est interposé entre l'épaulement (9a) de la douille et le joint d'étanchéité (11).

6. Dispositif de raccordement suivant l'une quelconque des revendications 1 à 5, pour câble composite (1) comprenant, outre le conduit (2) et la nappe (3), une gaine extérieure (5), caractérisé en ce que la gaine se termine à une certaine distance de la douille (9) et en ce que l'extrémité de cette gaine est entourée d'une deuxième bague de sertissage (7).

7. Dispositif de raccordement suivant les revendications 3 et 6 prises ensemble, caractérisé en ce que le tube de renfort (10) s'étend entre le conduit (2) et la nappe intermédiaire (3) jusque dans la deuxième bague de sertissage (7).

## Claims

1. Sealed connecting device for a composite cable with a conduit (2) covered by a jacket (3), of the type comprising a joining piece (8) provided with an extension (9) having a shoulder (9a), a sealing (11) and a squeezing ring (12) disposed around the said extension, the device being characterized by that the said shoulder (9a) is an inner shoulder of the said extension, that the sealing (11) is fitted on the conduit (2), that the said extension (9) is inserted between the conduit and the jacket (3) and forms a deformable squeezing sleeve, and that the sealing is pressed towards the shoulder by a deformed part (9b) of the sleeve.

2. Connecting device according to claim 1, characterized in that the part (9b) of the sleeve (9) deformed by the squeezing ring (12) is thinned for facilitating the squeezing.

3. Connecting device according to one of the claims 1 and 2, characterized in that the sealing (11) is interposed between the shoulder (9a) and a reinforcing tube (10) disposed around the conduit (2).

4. Connecting device according to claim 3, characterized in that the end of the reinforcing tube (10) comprises an anchoring part (13).

5. Connecting device according to one of the claims 1 to 4, characterized in that a bead (2a) provided at the end of the conduit (2) is disposed between the shoulder (9a) of the sleeve and the sealing (11).

6. Connecting device according to one of the claims 1 to 5, for composite cables (1) comprising in addition to the conduit (2) and the jacket (3), an outer sheath (5), characterized in that the sheath terminates at a certain distance of the sleeve (9) and that the end of the said sheath is covered by a second squeezing ring (7).

7. Connecting device according to the claims 3 and 6 taken together, characterized in that the reinforcing tube (10) extends between the conduit (2) and the intermediate jacket (3) up into the second squeezing ring (7).

## Patentansprüche

1. Abgedichtete Anschlußvorrichtung für kombinierte Kabel mit einer Leitung (2), die von einem Mantel (3) umgeben ist, mit einem Verbindungsstück (8), das mit einem Verlängerungsstück (9) versehen ist, welches einen Vorsprung (9a), eine Dichtung (11) und einen Quetschring (12) aufweist, der um dieses Verlängerungsstück herum angeordnet ist, wobei diese Vorrichtung dadurch gekennzeichnet ist, daß der Vorsprung (9a) ein Innenvorsprung des Verlängerungsstückes ist, daß die Dichtung (11) auf die Leitung (2) aufgezogen ist, daß das Verlängerungsstück (9) zwischen der Leitung und dem Mantel (3) eingefügt ist und eine deformierbare Quetschbuchse bildet und daß die Dichtung durch einen deformierten Teil (9b) der Buchse gegen den Vorsprung gedruckt ist.

2. Anschlußvorrichtung nach Anspruch 1, dadurch gekennzeichnet, daß der durch den Quetschring (12) deformierte Teil (9b) der Buchse (9) dünner gemacht ist, um die Quetschverbindung zu erleichtern.

3. Anschlußvorrichtung nach einem der Ansprüche 1 und 2, dadurch gekennzeichnet, daß die Dichtung (11) zwischen dem Vorsprung (9a) und einem Verstärkungsrohr (10) zwischengeordnet ist, welches um die Leitung (2) angeordnet ist.

4. Anschlußvorrichtung nach Anspruch 3, dadurch gekennzeichnet, daß das Ende des Verstärkungsrohres (10) einen Verankerungsteil (13) aufweist.

5. Anschlußvorrichtung nach einem der Ansprüche 1 bis 4, dadurch gekennzeichnet, daß ein am Ende der Leitung (2) vorgesehener Wulst (2a) zwischen dem Vorsprung (9a) der Buchse und der Dichtung (11) zwischengeordnet ist.

6. Anschlußvorrichtung nach einem der Ansprüche 1 bis 5, für kombinierte Kabel (1), die außer der Leitung (2) und dem Mantel (3) eine äußere Hülse (5) aufweisen, dadurch gekennzeichnet, daß die Hülse in einem bestimmten Abstand von der Buchse (9) endet und daß das Ende dieser Hülse von einem zweiten Quetschring (7) umgeben ist.

7. Anschlußvorrichtung nach den Ansprüchen 3 und 6 zusammengefaßt, dadurch gekennzeichnet, daß sich das Verstärkungsrohr (10) zwischen der Leitung (2) und dem Zwischenmantel (3) bis in den zweiten Quetschring (7) erstreckt.

FIG.1

FIG.2